# EUROPÄISCHE PATENTSCHRIFT

(11) **EP 1 351 009 B1**
(45) Veröffentlichungstag und Bekanntmachung des Hinweises auf die Patenterteilung: **12.07.2006**
(21) Anmeldenummer: 03002718.9
(22) Anmeldetag: 06.02.2003
(51) Int. Cl.: F16L 55/162

(54) **Vorrichtung und Verfahren zur Innenbeschichtung eines Rohres**
Device and process for lining a pipe
Dispositif et méthode de revêtement de la surface intérieure d'un tuyau

(30) Priorität: 05.03.2002 DE 10209485
(43) Veröffentlichungstag der Anmeldung: 08.10.2003
(73) Patentinhaber: WIWA WILHELM WAGNER GMBH & CO. KG, 35633 Lahnau (DE)
(72) Erfinder: Scherer, Oswald, 35633 Lahnau (DE)
(74) Vertreter: Böck, Bernhard

(56) Entgegenhaltungen:
- WO-A-01/75351

## Beschreibung

Die Erfindung betrifft eine Vorrichtung und ein Verfahren zur Innenbeschichtung eines Rohres nach dem Oberbegriff der unabhängigen Hauptansprüche.

Gattungsgemäße Vorrichtungen und Verfahren wie z.B. aus WO 01/75351 bekannt können bei der Sanierung von Rohrleitungen, aber auch bei der Herstellung von neuen Rohren zum Einsatz kommen. Das Rohrleitungsnetz ist an vielen Orten stark überaltert und brüchig, so dass es wegen der dabei auftretenden Leckagen einen dringenden Sanierungsbedarf gibt.

Aufgabe der vorliegenden Erfindung ist es deshalb, eine neue Vorrichtung und ein neues Verfahren zur Innenbeschichtung von Rohren mit einer härtbaren Masse vorzuschlagen.

Vorteilhafte Ausführungsformen der Erfindung sind Gegenstand der Unteransprüche.

Ein Vorteil der erfindungsgemäßen Vorrichtung liegt insbesondere darin, dass der Strahl der härtbaren Masse, die nach ihrer Aushärtung die gewünschte Innenbeschichtung des Rohres ergibt, auf eine rotatorisch antreibbare Schleudervorrichtung gerichtet wird. Nach dem Aufprall der härtbaren Masse auf die Schleudervorrichtung wird die härtbare Masse dann von der Schleudervorrichtung auf Grund der durch die Rotation wirkenden Fliehkräfte gegen die Innenoberfläche des Rohres geschleudert. Durch diese Art der Verteilung der härtbaren Masse kann eine außerordentlich gleichmäßige Beschichtung auf der Innenseite des Rohres erzeugt werden. Außerdem ist es möglich, härtbare Massen zu verarbeiten, die innerhalb sehr kurzer Topfzeiten aushärten.

In welcher Art der Antriebsmotor zum Antrieb der Schleudervorrichtung ausgebildet ist, ist grundsätzlich beliebig. So sind beispielsweise elektromotorisch oder hydraulisch betriebene Antriebsmotoren denkbar. Besonders vorteilhaft ist es, einen mit Druckluft oder einem ähnlichen Druckmedium angetriebenen Antriebsmotor zu verwenden, da mit diesen Antriebsmotoren sehr hohe Drehzahlen erreicht werden können.

Das Beschichtungsergebnis bei Verwendung der erfindungsgemäßen Vorrichtung hängt auch maßgeblich davon ab, welcher Abstand zwischen der Schleudervorrichtung und der Spritzvorrichtung vorhanden ist. Damit die erfindungsgemäße Vorrichtung auf unterschiedliche Randbedingungen eingestellt werden kann, ist es deshalb besonders vorteilhaft, wenn der Abstand zwischen Schleudervorrichtung und Spritzvorrichtung veränderbar ist.

Einen weiteren wichtigen Betriebsparameter stellt die Drehzahl der Schleudervorrichtung dar. Deshalb sollte auch die Drehzahl der Schleudervorrichtung verändert werden können, um somit unterschiedliche Randbedingungen der Beschichtung optimal erfüllen zu können.

Weiter sollte auch die Strömungsgeschwindigkeit der härtbaren Masse, beispielsweise gemessen als Austrittsgeschwindigkeit an der Spritzvorrichtung bzw. als Aufprallgeschwindigkeit an der Schleudervorrichtung, verändert werden können. Dies kann beispielsweise durch Änderung des Förderdruckes, mit dem die härtbare Masse bzw. die verschiedenen Komponenten, aus denen die härtbare Masse gemischt wird, in die Spritzvorrichtung gepumpt wird.

Um eine durchgehende Innenbeschichtung auf der Innenseite des Rohres abscheiden zu können, muss die Spritzvorrichtung relativ zum Rohr verfahren werden. Dazu kann erfindungsgemäß eine Fördereinrichtung, beispielsweise eine Robotermimik oder eine im Rohr verfahrbare Rohrmaus vorgesehen sein. Dabei ist es besonders vorteilhaft, wenn die Fördereinrichtung ferngesteuert verfahren werden kann, um dadurch die ferngesteuerte Beschichtung des Rohres zu ermöglichen. Damit wird es insbesondere möglich, dass das Bedienungspersonal die Beschichtung von außerhalb eines Rohres durchführt

Um das Beschichtungsergebnis im Rohr jederzeit kontrollieren zu können, kann an der Vorrichtung eine Beobachtungseinheit, die insbesondere in der Art einer Videokamera ausgebildet sein kann, vorgesehen werden. Die von der Videokamera aufgenommenen Bilder werden dann über eine Leitung an eine außerhalb des Rohres angeordnete Anzeigevorrichtung, beispielsweise einen Monitor, übertragen, so dass das Bedienungspersonal das Beschichtungsergebnis inspizieren kann.

In welcher Weise die Schleudervorrichtung konstruktiv ausgebildet ist, ist grundsätzlich beliebig. So sind beispielsweise kegelförmige oder kegelstumpfförmige Schleudervorrichtungen denkbar, bei denen der Strahl der härtbaren Masse auf die Kegelfläche gerichtet wird. Ein besonders gleichmäßiges Beschichtungsergebnis wird erreicht, wenn die Schleudervorrichtung in der Art einer Topfscheibe ausgebildet ist, die um den Mittelpunkt ihres Bodens rotierend angetrieben wird.

Bei Verwendung einer derartigen Topfscheibe kann der Strahl der härtbaren Masse dann so auf die Topfscheibe gerichtet werden, dass der Strahl im Wesentlichen am Boden der Topfscheibe und/oder an einer am Boden angeordneten Antriebswelle auf die Topfscheibe auftrifft. Durch diese spezielle Relativkinematik zwischen Strahl und Topfscheibe wird erreicht, dass die Strömungsrichtung der härtbaren Masse nach dem Aufprall stark umgelenkt wird. Ausgehend vom Aufprallpunkt wird nämlich die härtbare Masse durch die Zentrifugalkraft entlang des Bodens und entlang Innenwandung der Seitenwand der Topfscheibe nach außen getrieben. Sobald die härtbare Masse dann den Rand der Topfscheibe erreicht hat, werden Partikel der härtbaren Masse mit hoher Geschwindigkeit in Richtung der Innenwandung des Rohres geschleudert und bilden einen Sprühnebel. Im Ergebnis wird die Strömungsrichtung der härtbaren Masse entlang der Wandung der Topfscheibe bogenförmigen umgelenkt, was eine gleichmäßige Verteilung über den gesamten Umfang ermöglicht.. Durch diese sehr gleichmäßige Strömung wird insbesondere auch erreicht, dass die härtbare Masse von der Topfscheibe in alle Richtungen sehr gleichmäßig verteilt wird und sich keine Vorzugsrichtung in Abhängigkeit vom Aufprallort des Strahles auf der Topfscheibe ausbildet.

Die Bildung eines gleichmäßigen Strömungszustandes der härtbaren Masse am Boden der Topfscheibe wird dadurch unterstützt, wenn die Topfscheibe eine konkav ausgebildete Innenfläche aufweist. Der Übergang zwischen dem konkav ausgebildeten Boden der Topfscheibe und der Seitenwand der Topfscheibe sollte dabei vorzugsweise kantenfrei sein, so dass die härtbare Masse im Wesentlichen widerstandslos vom Boden der Topfscheibe auf die Seitenwand der Topfscheibe überströmen kann. Dies bedeutet mit anderen Worten, dass eine konkrete Übergangslinie zwischen Boden und Seitenwand der Topfscheibe nicht vorhanden ist.

Welche Zentrifugalkräfte auf die härtbare Masse entlang des Strömungsweges an der Seitenwand der Topfscheibe wirken, hängt maßgeblich vom Öffnungswinkel der Seitenwand relativ zur Mittelachse der Topfscheibe ab. Die Geschwindigkeit, mit der die Partikel der härtbaren Masse vom Rand der Topfscheibe in Richtung der Innenseite des Rohres geschleudert werden, wird um so größer, je größer der Öffnungswinkel gewählt ist. In Versuchsreihen wurde ermittelt, dass besonders gute Beschichtungsergebnisse erreicht werden, wenn der Öffnungswinkel α ungefähr im Bereich zwischen 20° bis 70° liegt. Insbesondere ein Öffnungswinkel von ungefähr 50° hat sich als hervorragend geeignet für die Beschichtung herausgestellt.

Ein weiteres wichtiges Kriterium zum Betrieb der erfindungsgemäßen Vorrichtung stellt der Aufprallwinkel β dar, unter dem der Strahl der härtbaren Masse relativ zur Mittelachse der Topfscheibe auf die Innenseite der Topfscheibe bzw. die am Boden angeordnete Antriebswelle auftrifft. Für den Aufprallwinkel β wurde in Versuchen ermittelt, dass dieser ungefähr im Bereich von 30° bis 70°, insbesondere ungefähr 40°, betragen sollte, um gute Beschichtungsergebnisse zu erreichen.

Welche Art von härtbarer Masse zur Beschichtung des Bodens verwendet wird, ist grundsätzlich beliebig. Besonders haltbare und gut verarbeitbare härtbare Massen ergeben sich, wenn die härtbare Masse aus mehreren Materialkomponenten, beispielsweise einem System aus einem Grundstoff und einem dazu geeigneten Härter, gemischt werden. Diese Materialkomponenten werden dann über getrennte Leitungen zur Spritzvorrichtung befördert und dort erst kurz vor dem eigentlichen Spritzvorgang gemischt.

In welcher Art die Spritzvorrichtung ausgebildet ist, ist grundsätzlich beliebig. Ein Problem bei der Verarbeitung härtbarer Massen, die aus mehreren Komponenten gemischt werden, stellt sich dadurch, dass die Mischstrecke zwischen dem Punkt, an dem die Komponenten miteinander vermischt werden und dem Punkt, an dem die Komponenten am Düsenaustritt austreten, möglichst kurz sein sollte. Nur so können Materialsysteme mit extrem kurzen Topfzeiten verarbeiten werden. Außerdem kann durch die kurze Mischstrecke der Reinigungsaufwand nach Beendigung des Spritzvorgangs verringert werden. Anderseits muss die Mischstrecke aber mindestens so lang sein, dass eine ausreichend homogene Vermischung der Materialkomponenten möglich ist.

Es wird deshalb eine Spritzvorrichtung vorgeschlagen, die ein mittels einer Düsennadel betätigbares Ventil, das nahe der Düsenöffnung angeordnet ist, und eine Betätigungs- und Rückstellvorrichtung für die Düsennadel aufweist. In der Düse ist ein in der Düsenöffnung mündender Düsenkanal vorgesehen, in dem die Düsennadel verschiebbar gelagert ist. Seitlich in den Düsenkanal münden Bohrungen, durch die die zu mischenden Komponenten in den Düsenkanal einströmen. Sobald die Düsennadel so weit zurückgezogen wird, dass die Bohrungen freigegeben werden, strömen die zu mischenden Komponenten unter dem Förderdruck aus seitlicher Richtung in den Düsenkanal ein, wo sie sich auf Grund der Strömungsturbulenzen innig miteinander vermischen. Die so zu realisierende Mischstrecke für die zu mischenden Komponenten kann dadurch extrem kurz gestaltet werden. Sobald der Spritzvorgang beendet werden soll, wird die Düsennadel im Düsenkanal zumindest so weit nach vorne geschoben, dass die Bohrungen abgedichtet sind.

Dabei ist es besonders vorteilhaft, wenn die Länge der Düsennadel so gewählt ist, dass diese im Ruhezustand, in dem die Bohrungen zur Zuführung der Materialkomponenten verschlossen sind, mit der Düsenöffnung der Spritzpistole abschließt. Dadurch wird erreicht, dass bei Beendigung des Spritzvorganges durch Vorschieben der Düsennadel der gesamte Restbestand an bereits gemischten Materialkomponenten durch die Spitze der Düsennadel aus dem Düsenkanal herausgedrückt wird. Bei ausreichend genau gefertigter Passung zwischen dem Durchmesser des Düsenkanals und dem Durchmesser der Düsennadel verbleiben dann nach Vorschieben der Düsennadel im Wesentlichen keine härtbaren Materialanteile mehr im Düsenkanals so dass eine Reinigung der Spritzvorrichtung nach Beendigung des Spritzvorganges wesentlichen vereinfacht wird.

Eine besonders gleichmäßige Vermischung der zu mischenden Materialkomponenten wird erreicht, wenn die Bohrungen zur Zuführung der Materialkomponenten in der gleichen Ebene liegend und im wesentlichen rechtwinkelig zum Düsenkanal verlaufend angeordnet sind. D.h. die Düsenkanäle können einen geringen Anstellwinkel aufweisen. Der Durchmesser der Bohrungen ist dabei nach einer bevorzugten Ausführungsform kleiner als der des Düsenkanals, so dass sich die unter Druck stehenden Materialkomponenten beim Einströmen in den Düsenkanal entspannen, was die Vermischung verbessert.

Um starke Strömungsturbulenzen bei der Vermischung der Materialkomponenten im Düsenkanal zu erreichen, können die Achsen der Bohrungen gegeneinander versetzt angeordnet sein. Auch durch diese Maßnahme wird die Vermischung der Materialkomponenten verbessert, so dass die erforderliche Mischstrecke verkürzt werden kann.

Um die Spritzvorrichtung bei Verwendung der erfindungsgemäßen Vorrichtung auch ferngesteuert betätigen zu können, ist es besonders vorteilhaft, wenn die Düsennadel mittels eines von einem zweiseitig wirkenden Druckkolbens und eine daran befestigten Welle betätigbar ist.

Durch das Aufschleudem der härtbaren Masse entstehen im Inneren des Rohres, Luftturbulenzen, die negative Auswirkungen auf das Beschichtungsergebnis haben können. Um diese negativen Luftturbulenzen zu vermindern bzw. zu vermeiden kann deshalb an der Vorrichtung ein Element zur Erzeugung einer gerichteten Luftströmung vorgesehen sein. Dieses Element kann z.B. in der Art eines Propellers ausgebildet werden. Durch diese zusätzliche Luftströmung werden die negativen Luftturbulenzen überlagert und dadurch abgeschwächt bzw. beseitigt.

Das erfindungsgemäße Verfahren zeichnet sich dadurch aus, dass zeitgleich zur Erzeugung des von der Schleudervorrichtung weggeschleuderten Nebels der härtbaren Masse die Vorrichtung mit einem bestimmten Vorschub längs des Rohres verfahren wird. Durch diese kombinierte Bewegungskinematik kann im Ergebnis eine gleichmäßige Beschichtung auf der Innenoberfläche längs des Rohres erzeugt werden.

Besonders gute Beschichtungsergebnisse werden erreicht, wenn die härtbare Masse mit einer Topfzeit von wenigen Sekunden aushärtet. Dies bedeutet mit anderen Worten, dass die härtbare Masse bereits unmittelbar nach Aufprall auf der Rohrinnenseite ausgehärtet ist, so dass unerwünschte Materialverschiebungen, beispielsweise verursacht durch Tropfnasen, die von der Oberseite des Rohres zur Unterseite des Rohres ablaufen, zuverlässig ausgeschlossen sind.

Derartig kurze Topfzeiten lassen sich besonders einfach mit Mehrkomponenten-Systemen bei denen die härtbare Masse aus mehren Materialkomponenten, beispielsweise einem Grundstoff und einem dazu geeigneten Härter, gemischt werden, herstellen.

Um den Reinigungsaufwand nach Beendigung des Spritzvorganges zu minimieren, sollen die verschiedenen Materialkomponenten, die zur Bildung der härtbaren Masse miteinander gemischt werden, erst unmittelbar vor Bildung des Strahls in der Spritzvorrichtung miteinander in Verbindung treten.

In Versuchen haben sich härtbare Massen aus 2-Komponenten-Kunststoff auf Polyurethanbasis und/oder Polyharnstoffbasis als besonders geeignet für die Verwendung bei dem erfindungsgemäßen Verfahren herausgestellt.

Die Drehzahl der Schleudervorrichtung sollte abhängig von der gewünschten Schichtdicke, der Vorschubgeschwindigkeit, der Zuführungsgeschwindigkeit der härtbaren Masse und den sonstigen Eigenschaften der härtbaren Masse in einem Bereich von 2.000 Umdrehungen/min bis 60.000 Umdrehungen/min gewählt werden. Die meisten Beschichtungsaufgaben können mit einer Drehzahl von ungefähr 10.000 Umdrehungen/min mit gutem Beschichtungsergebnis gelöst werden.

Als Förderdruck, mit dem die härtbare Masse bzw. deren Komponenten in die Spritzvorrichtung zugeführt werden, haben sich in den Versuchen Werte von 50 bar bis 500 bar als vorzugswürdig herausgestellt.

Um auch während des Spritzvorganges flexibel auf sich ändernde Randbedingungen reagieren zu können, ist es besonders vorteilhaft, wenn die Drehzahl der Schleudervorrichtung und/oder der Abstand zwischen Spritzvorrichtung und Schleudervorrichtung und/oder die Geschwindigkeit des Strahls der härtbaren Masse in Abhängigkeit anderer Verfahrensparameter verändert werden können. Dankbare Verfahrensparameter sind dabei insbesondere die gewünschte Schichtdicke, der Rohrdurchmesser, der Vorschub- bzw. die Vorschubgeschwindigkeit der Vorrichtung und/oder die Materialeigenschaften der härtbaren Masse. Dabei ist es insbesondere auch denkbar, Steuerstrecken oder Regelkreise vorzusehen, um einen und mehrere Prozessparameter als Führungsgröße zu steuern bzw. zu regeln. Beispielsweise wäre es denkbar, mittels geeigneter Videoauswertung die jeweils erzeugte Schichtdicke zu messen und abhängig von der gewünschten Soll-Schichtdicke eine der möglichen Stellgrößen, beispielsweise die Drehzahl der Schleudervorrichtung oder die Geschwindigkeit des Strahls der härtbaren Masse zu erhöhen bzw. abzusenken, um dadurch die Ist-Schichtdicke an die Soll-Schichtdicke anzunähern.

In den Zeichnungen ist eine Ausführungsform der Erfindung dargestellt und wird nachfolgend beispielhaft erläutert.

Es zeigen:
- Fig. 1: eine Vorrichtung zur Innenbeschichtung eines im Querschnitt dargestellten Rohres;
- Fig. 3: die Spritzvorrichtung der in Fig. 1 dargestellten Vorrichtung im Längsschnitt;
- Fig. 4: die Düse der Spritzvorrichtung gemäß Fig. 3 in einem vergrößert dargestellten Längsschnitt;
- Fig. 5: die Düse gemäß Fig. 4 im Querschnitt entlang der Schnittlinie I-I.
- Fig. 6: eine zweite Ausführungsform einer Vorrichtung zur Innenbeschichtung eines im Querschnitt dargestellten Rohres;
- Fig. 7: die Schleudervorrichtung mit Propeller der in Fig. 6 dargestellten Vorrichtung im **Querschnitt;**

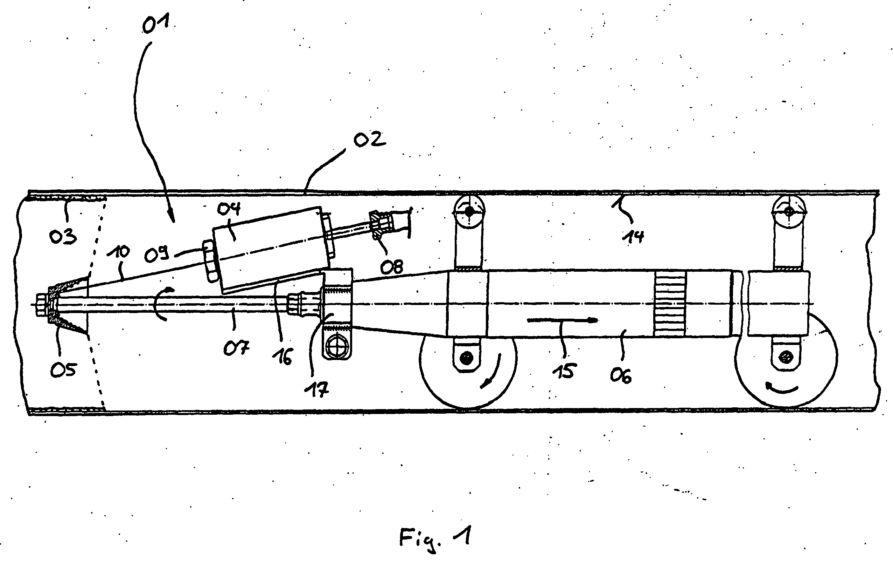

Die in Fig. 1 schematisch dargestellte Vorrichtung 01 dient zur Innenbeschichtung eines Rohres 02 mit einer härtbaren Masse 03. Die Vorrichtung 01 ist dabei im Wesentlichen aus einer Spritzvorrichtung 04, einer in der Art einer Topfscheibe ausgebildeten Schleudervorrichtung 05 und einem mittels Druckluft antreibbaren Antriebsmotor 06, dessen rotatorische Antriebsbewegung mittels einer Antriebswelle 07 auf die Schleudervorrichtung 05 übertragen wird, aufgebaut.

An die Spritzvorrichtung 04 werden zum Betrieb der Vorrichtung 01 zwei in Fig. 1 nicht dargestellte Versorgungsleitungen an jeweils einem Anschlussflansch 08 befestigt. Durch die beiden Versorgungsleitungen wird die Spritzvorrichtung 04 mit einer unter Druck stehenden polyurethanischen Grundmasse und einem ebenfalls unter Druck stehenden Härter versorgt, die in der Spritzvorrichtung 04 unter Bildung einer härtbaren Masse gemischt werden. An der Vorderseite der Spritzvorrichtung 04 ist eine Düse 09 angeordnet, durch die ein gerichteter Strahl 10 der härtbaren Masse aus der Spritzvorrichtung 04 austreten kann.

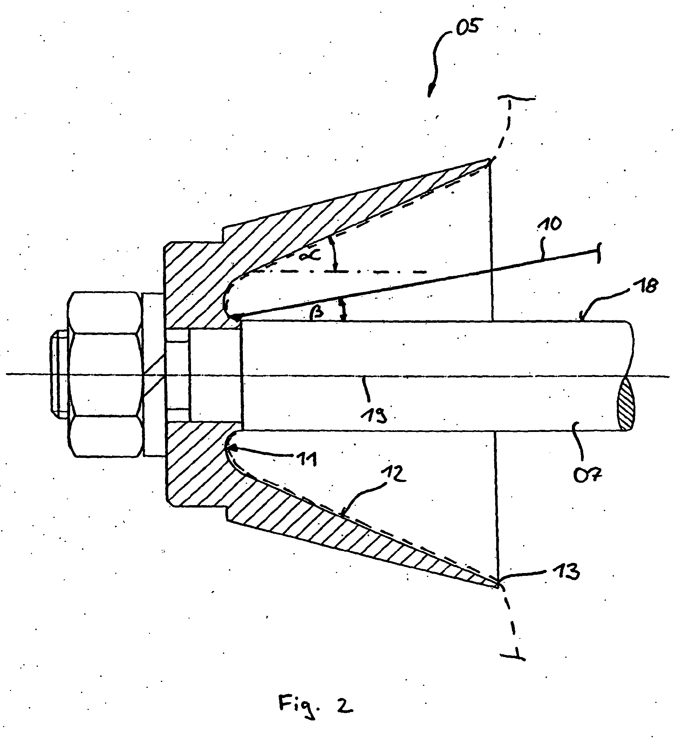

Der Strahl 10 der härtbaren Masse ist dabei auf den konkav ausgebildeten Boden 11 (siehe Fig. 2) der Topfscheibe 05 gerichtet. Durch Antrieb des Antriebsmotors 06 wird die Schleudervorrichtung 05 mit einer Drehzahl von beispielsweise von ungefähr 10.000 Umdrehungen/min rotatorisch angetrieben. Auf Grund dieser Drehbewegung der Schleudervorrichtung 05 wirkt auf die härtbare Masse nach Aufprall am Boden 11 der Topfscheibe 05 eine hohe Zentrifugalkraft, durch die die härtbare Masse entlang des Bodens 11 und anschließend entlang der Innenseite 12 der Seitenwand (siehe Fig. 2) nach außen getrieben wird. Im Ergebnis bewirkt die Zentrifugalkraft eine vom Innenbereich des Bodens 11 ausgehende Strömung der härtbaren Masse, die am Rand 13 (siehe Fig. 2) der Topfscheibe 05 endet. Sobald die Strömung der härtbaren Masse den Rand 13 erreicht hat und damit nicht mehr von der Wandung der Topfscheibe 12 von außen abgestützt wird, wird die härtbare Masse in Form von fein verteilten Partikeln in Richtung der Innenwandung 14 des Rohrs 02 nach außen geschleudert, was in Fig. 1 strichliniert angedeutet ist. Im Ergebnis bildet sich durch die Rotationsbewegung der Schleudervorrichtung 02 ein kegelstumpfförmiger Sprühnebel mit sehr gleichmäßiger Materialverteilung, so dass die Beschichtung 03 mit einer sehr gleichmäßigen Schichtdicke auf der Innenwandung 14 abgeschieden wird.

Die Vorrichtung 01 ist im Rohr 02 axial verfahrbar und wird zeitgleich zum Betrieb der Spritzvorrichtung 04 und der rotatorischen Bewegung der Schleudervorrichtung 05 in Richtung des Bewegungspfeiles 15 verfahren. Dadurch wird es möglich, auf der Innenwandung 14 eine durchgehende Innenbeschichtung 03 mit sehr gleichmäßiger Schichtdicke zu erzeugen. Soweit erforderlich kann die Vorrichtung auch alternierend hin- und herbewegt werden, um beispielsweise an Rohrübergängen eine ausreichend Schichtdicke aufzubauen.

Die Spritzvorrichtung 04 ist auf einem Bügel 16 befestigt, der mittels eines Ringflansches 17 am Gehäuse des Antriebsmotors 06 fixierbar ist. Am Bügel 16 können beispielsweise Langlöcher vorgesehen sein, so dass die Spritzvorrichtung 04 in unterschiedlichen Relativpositionen zur Schleudervorrichtung 05 befestigbar ist. Dadurch wird eine Justierung des Abstandes zwischen der Spritzvorrichtung 04 und der Schleudervorrichtung 05 ermöglicht. Es sind auch Ausführungsfcinnen denkbar, beispielsweise mit entsprechenden Stellmotoren, bei denen der Abstand zwischen der Spritzvorrichtung 04 und der Schleudervorrichtung 05 ferngesteuert auch während des Beschichtungsprozesses veränderbar ist.

Außerdem kann die Drehzahl des Antriebsmotors 06 und der Förderdruck für die Einförderung der zu mischenden Komponenten in die Spritzvorrichtung 04 vor und während des Spritzvorganges variiert werden.

In Fig. 2 ist die an der Spitze der Antriebswelle 07 befestige Schleudervorrichtung 05 im Querschnitt dargestellt. Man erkennt, dass der Boden 11 der Topfscheibe 05 konkav ausgerundet ist. Die Übergänge des Bodens 11 zum Außendurchmesser 18 der Antriebswelle 07 bzw. der Innenseite 12 der Seitenwandung der Topfscheibe 05 kantenfrei gestaltet sind.

Trifft nun der in Fig. 2 angedeutete Strahl 10 der härtbaren Masse auf den Außendurchmesser 18 der Antriebswelle 07 bzw. den Innendurchmesser des Bodens 11 auf, so wird durch die konkave Form des Bodens 11 und die kantenfreien Übergänge zwischen Außendurchmesser 18, Boden 11 und Innenseite 12 der Seitenwandung unter Einwirkung der Zentrifugalkraft eine gleichmäßige Strömung der härtbaren Masse ermöglicht.

Besonders vorteilhaft ist es, wenn der Strahl 10, wie in Fig. 2 schematisch angedeutet, gerade im Übergang zwischen Außendurchmesser 18 und Boden 11 auf die Schleudervorrichtung 05 auftrifft. Im Ergebnis wird dadurch nämlich erreicht, dass im Wesentlichen die gesamte härtbare Masse vollständig nach außen getrieben wird. Das unerwünschte Aushärten der härtbaren Masse auf der Schleudervorrichtung 05 kann dadurch vermieden werden.

Weiter sind in Fig. 2 der Öffnungswinkel α an der Innenseite 12 der Topfscheibe 05 und der Aufprallwinkel β, mit dem der Strahl 10 relativ zur Mittelachse 19 auf die Schleudervorrichtung 05 auftrifft, schematisch angedeutet.

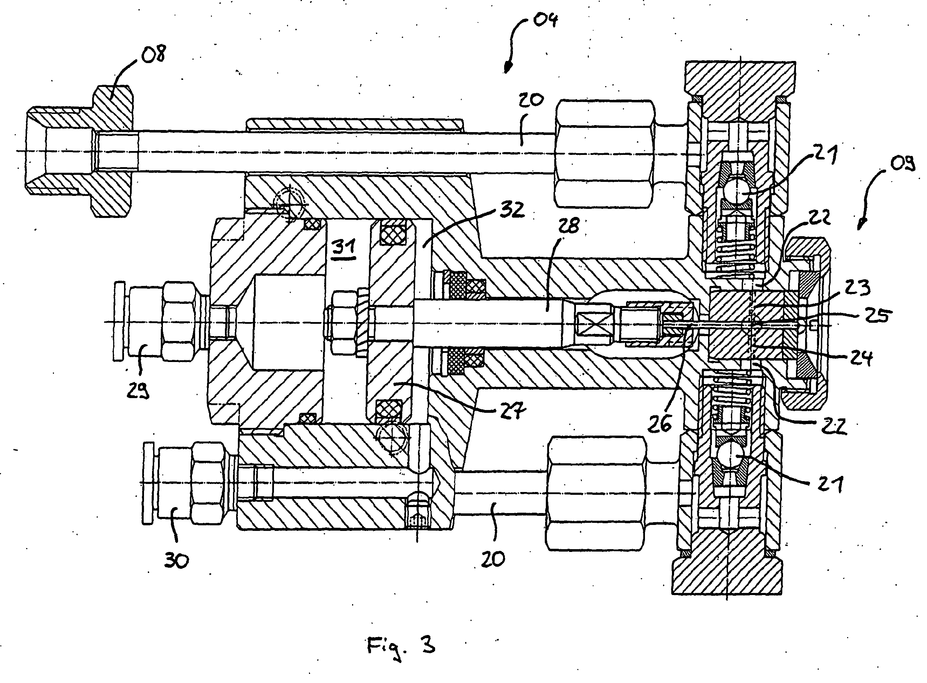

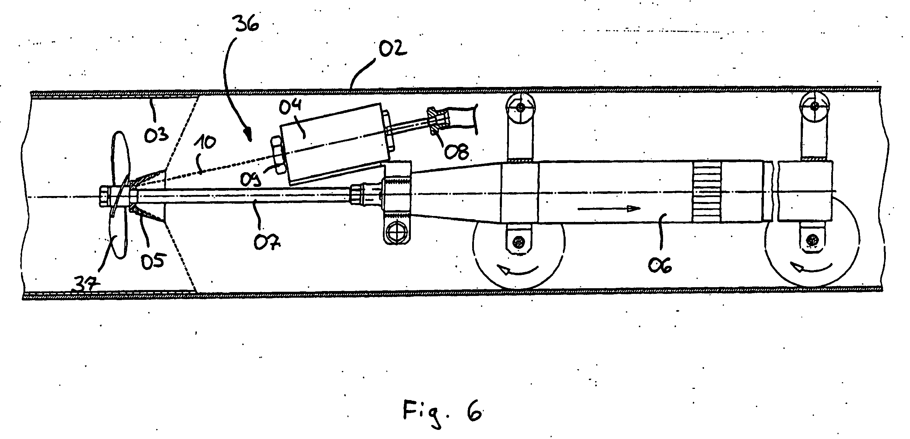

Die in Fig. 1 lediglich schematisch angedeutete Spritzvorrichtung 04 ist in Fig. 3 in einem detaillierten Längsschnitt dargestellt. An der Vorrichtung 04 sind zwei Anschlussflanschen 08 vorgesehen, von denen in Fig. 3 lediglich einer dargestellt ist. An diese Anschlussflansche 08 wird jeweils eine Schlauchleitung befestigt, durch die einerseits eine polyurethanische Grundmasse und anderseits ein geeigneter Härter zu der Spritzvorrichtung 04 unter hohem Förderdruck gefördert werden. Durch die Verbindungsrohre 20 werden die beiden Materialkomponenten getrennt voneinander durch Rückschlagventile 21 zu zwei Vorkammern 22 gefördert. Beide Vorkammern 22 stehen über jeweils eine Bohrung 23 bzw. 24 (siehe Fig. 5) mit einem Düsenkanal 25 in Verbindung. Eine Düsennadel 26 ist im Düsenkanal 25 verschiebbar gelagert, wobei der Durchmesser der Düsennadel 26 derart an den Innendurchmesser des Düsenkanals 25 angepasst ist, dass die Bohrungen 23 und 24 durch die Düsennadel 26 verschlossen werden können.

Zur Betätigung der Düsennadel 26 ist ein zweiseitig wirkender Druckkolben 27 vorgesehen, der über eine Welle 28 mit der Düsennadel 26 verbunden ist. Durch die Druckluftanschlüsse 29 und 30 können die vor und hinter dem Druckkolben 27 vorgesehenen Druckkammern 31 und 32 mit Druckluft beaufschlagt werden, so dass der Druckkolben 27 zusammen mit der Düsennadel 26 bei Einstellung eines entsprechenden Differenzdrucks axial verschoben wird.

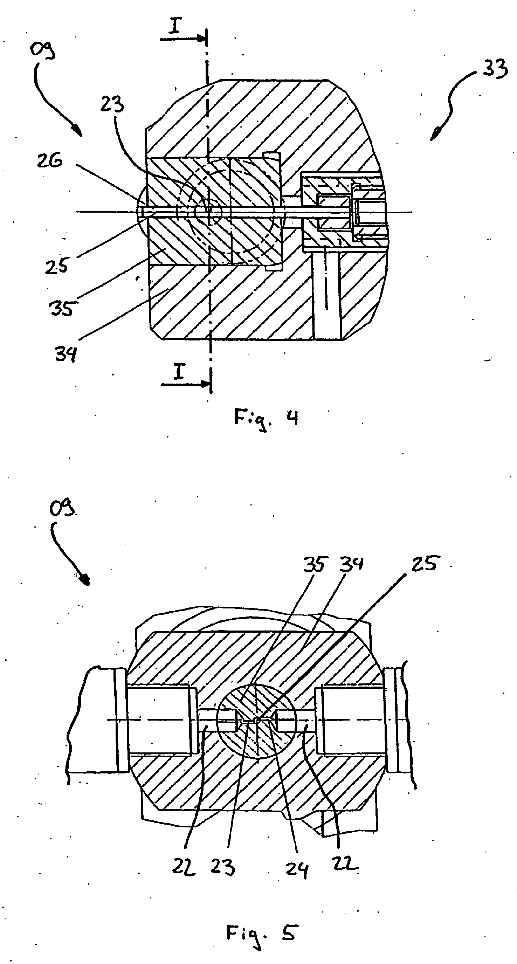

Der Aufbau der Düse 09 mit dem Düsenkanal 25, der Düsennadel 26 und den Bohrungen 23 bzw. 24 zur Zuführung der beiden Materialkomponenten ist in den Fig. 4 und 5 vergrößert dargestellt. Die Komponenten bilden gemeinsam ein Ventil 33 durch das der Strahl 10 der härtbaren Masse abgesperrt werden kann. Man erkennt, dass die Düsennadel 26 gerade so lang ist, dass sie im Ruhezustand mit der Düsenöffnung 33 abschließt. Die beiden Bohrungen 23 und 24 verlaufen, wie aus Fig. 5 erkennbar, in einer Ebene rechtwinkelig zum Düsenkanal 25, wobei der Durchmesser der Bohrungen 23 und 24 kleiner als der des Düsenkanals 25 ist. Außerdem sind die Achsen der Bohrungen 23 und 24 gegeneinander versetzt, um eine Verwirbelung der zu mischenden Materialkomponenten im Düsenkanal 25 zu bewirken. Konstruktiv wird das Ventil 33 von einem Grundkörper 34 und einem Hartmetalleinsatz 35, in den die Bohrungen 23 und 24 sowie der Düsenkanal 25 eingearbeitet ist, gebildet. Auch die Düsennadel 26 ist aus Hartmetall oder alternativ dazu aus Keramik gefertigt.

In Fig. 6 ist eine zweite Ausführungsform 36 einer Vorrichtung zur Innenbeschichtung im Querschnitt dargestellt. Der Aufbau der Vorrichtung 36 entspricht im wesentlichen dem Aufbau der Vorrichtung 01. Zusätzlich ist am Ende der Antriebswelle 07 ein Propeller 37 zur Erzeugung einer gerichteten Luftströmung befestigt. Der Propeller 37 weist vier Flügel auf

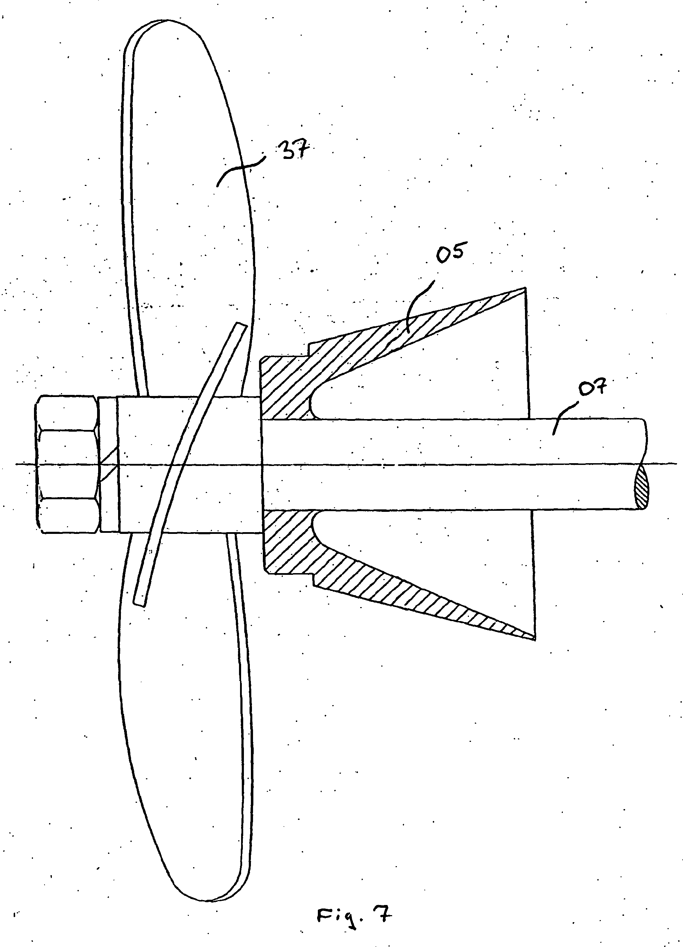

In Fig. 7 ist die Schleudervorrichtung 05 mit Propeller 37 vergrößert dargestellt.

### Bezugszeichenliste

- 01: Vorrichtung
- 02: Rohr
- 03: Innenbeschichtung
- 04: Spritzvorrichtung
- 05: Schleudervorrichtung
- 06: Antriebsmotor
- 07: Antriebswelle
- 08: Anschlussflansch
- 09: Düse
- 10: Strahl
- 11: Boden (Schleudervorrichtung)
- 12: Innenseite der Seitenwandung (Schleudervorrichtung)
- 13: Rand (Schleudervorrichtung)
- 14: Innenwandung (Rohr)
- 15: Bewegungspfeil (Vorrichtung)
- 16: Bügel
- 17: Ringflansch
- 18: Außendurchmesser (Antriebswelle)
- 19: Mittelachse (Schleudervorrichtung)
- 20: Zufuhrleitung
- 21: Rückschlagventil
- 22: Vorkammer
- 23: Bohrung zur Zuführung einer ersten Komponente
- 24: Bohrung zur Zuführung einer zweiten Komponente
- 25: Düsenkanal
- 26: Düsennadel
- 27: Druckkolben
- 28: Welle
- 29: Druckluftanschluss
- 30: Druckluftanschluss
- 31: Druckkammer
- 32: Druckkammer
- 33: Ventil
- 34: Grundkörper
- 35: Hartmetalleinsatz
- 36: Vorrichtung
- 37: Propeller

## Patentansprüche

1. Vorrichtung (01) zur Beschichtung der Innenwandung (14) eines Rohres (02) mit einer härtbaren Masse, wobei an der Vorrichtung (01) eine Spritzvorrichtung (04) vorgesehen ist, mittels der ein gerichteter Strahl (10) der härtbaren Masse erzeugbar ist,
**dadurch gekennzeichnet,**
**dass** an der Vorrichtung (01) eine rotatorisch antreibbare Schleudervorrichtung (05) vorgesehen ist, wobei der Strahl (10) der härtbaren Masse derart auf die Schleudervorrichtung (05) gerichtet ist, dass die härtbare Masse von der Schleudervorrichtung (05) aufgrund der durch die Rotation wirkenden Fliehkraft gegen die Innenwandung (14) des Rohrs (02) geschleudert wird.

2. Vorrichtung nach Anspruch 1,
**dadurch gekennzeichnet,**
**dass** zum Antrieb der Schleudervorrichtung (05) ein insbesondere mit Druckluft oder ähnlichem angetriebener Antriebsmotor (06) vorgesehen ist.

3. Vorrichtung nach Anspruch 1 oder 2,
**dadurch gekennzeichnet,**
**dass** der Abstand zwischen Schleudervorrichtung (05) und Spritzvorrichtung (04) veränderbar ist.

4. Vorrichtung nach einem der Ansprüche 1 bis 3,
**dadurch gekennzeichnet,**
**dass** die Drehzahl der Schleudervorrichtung (05) veränderbar ist.

5. Vorrichtung nach einem der Ansprüche 1 bis 4,
**dadurch gekennzeichnet,**
**dass** die Strömungsgeschwindigkeit des Strahls (10) der härtbaren Masse, insbesondere durch Änderung des Förderdrucks, veränderbar ist.

6. Vorrichtung nach einem der Ansprüche 1 bis 5,
**dadurch gekennzeichnet,**
**dass** die Vorrichtung (01) mittels einer Fördereinrichtung, insbesondere ferngesteuert, längs des Rohres (02) verfahrbar ist.

7. Vorrichtung nach einem der Ansprüche 1 bis 6,
**dadurch gekennzeichnet,**
**dass** an der Vorrichtung eine Beobachtungseinheit, insbesondere eine Videokamera, vorgesehen ist.

8. Vorrichtung nach einem der Ansprüche 1 bis 7,
**dadurch gekennzeichnet,**
**dass** die Schleudervorrichtung (05) in der Art einer Topfscheibe ausgebildet ist, die um den Mittelpunkt ihres Bodens (11) rotierend antreibbar ist.

9. Vorrichtung nach Anspruch 8,
**dadurch gekennzeichnet,**
**dass** der Strahl (10) der härtbaren Masse auf der Innenseite der Topfscheibe (05) auftrifft.

10. Vorrichtung nach Anspruch 9,
**dadurch gekennzeichnet,**
**dass** der Strahl (10) der härtbaren Masse im Wesentlichen am Boden (11) der Topfscheibe (05) und/oder an vom Boden (11) der Topfscheibe ausgehenden Antriebswelle (07) auftrifft.

11. Vorrichtung nach einem der Ansprüche 8 bis 10,
**dadurch gekennzeichnet,**
**dass** der Boden (11) der Topfscheibe (05) eine konkav ausgebildete Innenfläche aufweist.

12. Vorrichtung nach einem der Ansprüche 8 bis 11,
**dadurch gekennzeichnet,**
**dass** die Seitenwand der Topfscheibe (05) an der Innenseite (12) eine Öffnungswinkel (α) von 20° bis 70°, insbesondere von ungefähr 50°, relativ zur Mittelachse (19) der Topfscheibe (05) aufweist.

13. Vorrichtung nach einem der Ansprüche 8 bis 12,
**dadurch gekennzeichnet,**
**dass** der Strahl (10) der härtbaren Masse mit einem Aufprallwinkel (β) von 30° bis 70°, insbesondere von ungefähr 40°, relativ zur Mittelachse (19) der Topfscheibe (05) auf die Topfscheibe (05) auftrifft.

14. Vorrichtung nach einem der Ansprüche 1 bis 13,
**dadurch gekennzeichnet,**
**dass** in der Spritzvorrichtung (04) zur Herstellung des Strahls (10) der härtbaren Masse mindestens zwei Materialkomponenten, insbesondere ein Grundstoff und ein dazu geeigneter Härter, gemischt werden können.

15. Vorrichtung nach einem der Ansprüche 1 bis 14,
**dadurch gekennzeichnet,**
**dass** mit der Spritzvorrichtung (04) ein gerichteter Rundstrahl und/oder Flächenstrahl der härtbaren Masse erzeugbar ist.

16. Vorrichtung nach einem der Ansprüche 1 bis 15,
**dadurch gekennzeichnet,**
**dass** die Spritzvorrichtung (04) ein mittels einer Düsennadel (26) betätigbares Ventil (33), das nahe einer Düsenöffnung angeordnet ist, und eine Betätigungs- und Rückstellvorrichtung (27, 28, 29, 30, 31, 32) für die Düsennadel (26) aufweist, wobei in der Düse (09) ein in der Düsenöffnung mündender Düsenkanal (25) vorgesehen ist, in dem die Düsennadel (26) verschiebbar gelagert ist, und wobei der Düsenkanal (25) zumindest eine, insbesondere zwei, seitlich in den Düsenkanal (25) eintretende und zur Zuführung von Komponenten der härtbaren Masse dienende Bohrung (23, 24) aufweist, die über die dem Düsenkanal (25) im Durchmesser angepasste Düsennadel (26) verschließbar ist.

17. Vorrichtung nach Anspruch 16,
**dadurch gekennzeichnet,**
**dass** die Länge der Düsennadel (26) so gewählt ist, dass diese im Ruhezustand mit der Düsenöffnung des Ventils (33) abschließt.

18. Vorrichtung nach Anspruch 16 oder 17,
**dadurch gekennzeichnet,**
**dass** das Ventil (33) gleichzeitig die Düsenöffnung der Spritzvorrichtung (04) bildet.

19. Vorrichtung nach einem der Ansprüche 16 bis 18,
**dadurch gekennzeichnet,**
**dass** das die Düse (09), insbesondere die Düsennadel (26) und das den Düsenkanal bildende Bauteil (35), zumindest teilweise aus einem Hartmetall oder Keramik gefertigt ist.

20. Vorrichtung nach einem der Ansprüche 16 bis 19,
**dadurch gekennzeichnet,**
**dass** die Bohrungen (23, 24) in der gleichen Ebene liegend und im wesentlichen rechtwinkelig zum Düsenkanal (25) verlaufend angeordnet sind.

21. Vorrichtung nach einem der Ansprüche 16 bis 20,
**dadurch gekennzeichnet,**
**dass** der Durchmesser der Bohrungen (23, 24) jeweils kleiner als der des Düsenkanals (25) ist.

22. Vorrichtung nach einem der Ansprüche 16 bis 21,
**dadurch gekennzeichnet,**
**dass** die Achsen der Bohrungen (23, 24) gegeneinander versetzt sind.

23. Vorrichtung nach einem der Ansprüche 16 bis 22,
**dadurch gekennzeichnet,**
**dass** die Düsennadel (26) mittels einer von einem zweiseitig wirkenden Druckkolben (27) betätigten Welle (28) verschiebbar ist.

24. Vorrichtung nach einem der Ansprüche 1 bis 23,
**dadurch gekennzeichnet,**
**dass** an der Vorrichtung ein Element zur Erzeugung einer gerichteten Luftströmung vorgesehene ist.

25. Vorrichtung nach Anspruch 24,
**dadurch gekennzeichnet,**
**dass** das Element zur Erzeugung einer gerichteten Luftströmung in der Art eines Propellers ausgebildet ist.

26. Vorrichtung nach Anspruch 25,
**dadurch gekennzeichnet,**
**dass** der Propeller vor der Schleudervorrichtung (05) auf der Antriebswelle (07) befestigt ist.

27. Verfahren zur Innenbeschichtung eines Rohres (02) mit einer härtbaren Masse,
**dadurch gekennzeichnet,**
- **dass** mit einer Spritzvorrichtung (04) ein gerichteter Strahl (10) der härtbaren Masse erzeugt wird,
- der Strahl (10) der härtbaren Masse auf eine Schleudervorrichtung (05) gerichtet wird,
- die härtbare Masse von der Schleudervorrichtung (05) aufgrund der durch die Rotation wirkenden Fliehkraft gegen die Innenwandung (14) des Rohrs (02) geschleudert wird,
- wobei zeitgleich die Schleudervorrichtung (05) und die Spritzvorrichtung (04) mit einem bestimmten Vorschub längs des Rohres (02) verfahren werden, um eine Beschichtung (03) auf Innenwandung (14) längs des Rohrs (02) zu erzeugen.

28. Verfahren nach Anspruch 27,
**dadurch gekennzeichnet,**
**dass** die härtbare Masse mit einer Topfzeit von wenigen Sekunden aushärtet.

29. Verfahren nach Anspruch 27 oder 28,
**dadurch gekennzeichnet,**
**dass** die härtbare Masse aus zwei Materialkomponenten, insbesondere ein Grundstoff und ein dazu geeigneter Härter, gemischt wird.

30. Verfahren nach Anspruch 29,
**dadurch gekennzeichnet,**
**dass** als härtbare Masse ein 2-Komponenten-Kunststoff auf Polyurethanbasis und/oder Polyharnstoffbasis verwendet wird.

31. Verfahren nach Anspruch 29 oder 30,
**dadurch gekennzeichnet,**
**dass** die beiden Materialkomponenten erst unmittelbar vor der Bildung des Strahls in der Spritzvorrichtung gemischt werden.

32. Verfahren nach einem der Ansprüche 27 bis 31,
**dadurch gekennzeichnet,**
**dass** die Schleudervorrichtung (05) mit einer Drehzahl von 2.000 Umdrehungen/min bis 60.000 Umdrehungen/min rotiert.

33. Verfahren nach einem der Ansprüche 27 bis 32,
**dadurch gekennzeichnet,**
**dass** die härtbare Masse oder deren Komponenten mit einem Förderdruck von 50 bar bis 500 bar in die Spritzvorrichtung (04) eingefördert wird.

34. Verfahren nach einem der Ansprüche 27 bis 33,
**dadurch gekennzeichnet,**
**dass** die Drehzahl der Schleudervorrichtung (05) und/oder der Abstand zwischen Spritzvorrichtung (04) und Schleudervorrichtung (05) und/oder die Geschwindigkeit des Strahls (10) der härtbaren Masse jeweils einzeln oder gemeinsam in Abhängigkeit von der gewünschten Schichtdicke der Innenbeschichtung (03) und/oder vom Rohrdurchmesser des zu beschichtenden Rohres (02) und/oder von der Vorschubgeschwindigkeit der Vorrichtung (01) und/oder den Materialeigenschaften der härtbaren Masse veränderbar ist.

35. Verfahren nach einem der Ansprüche 27 bis 34,
**dadurch gekennzeichnet,**
**dass** im Bereich der Schleudervorrichtung (05), insbesondere durch Antrieb eins Propellers, eine gerichtete Luftströmung erzeugt wird.

## Claims

1. A device (01) for the coating of the internal wall (14) of a pipe (02) with a hardenable compound, whereby there is provided on the device (01) a spraying device (04), by means of which a directed jet (10) of the hardenable compound can be generated,
**characterised in that**
a centrifugal device (05) drivable in a rotary fashion is provided on the device (01), whereby the jet (10) of the hardenable compound is directed onto the centrifugal device (05) in such a way that the hardenable compound is hurled by the centrifugal device (05) against the internal wall (14) of the pipe (02) by reason of the centrifugal force acting as a result of the rotation.

2. The device according to claim 1,
**characterised in that** a drive motor (06) driven with compressed air or similar is provided for the driving of the centrifugal device (05).

3. The device according to claim 1 or 2,
**characterised in that** the distance between the centrifugal device (05) and the spraying device (04) is variable.

4. The device according to any one of claims 1 to 3,
**characterised in that** the speed of the centrifugal device (05) is variable.

5. The device according to any one of claims 1 to 4,
**characterised in that** the flow rate of the jet (10) of the hardenable compound is variable, in particular by changing the delivery pressure.

6. The device according to any one of claims 1 to 5,
**characterised in that** the device (01) is traversable along the pipe (02) by means of a conveying device, in particular remote-controlled.

7. The device according to any one of claims 1 to 6,
**characterised in that** an observation unit, in particular a video camera, is provided on the device.

8. The device according to any one of claims 1 to 7,
**characterised in that** the centrifugal device (05) is designed in the manner of a cup wheel, which can be driven in a rotary fashion around the centre-point of its base (11).

9. The device according to claim 8,
**characterised in that** the jet (10) of the hardenable compound strikes the inner side of the cup wheel (05).

10. The device according to claim 9,
**characterised in that** the jet (10) of the hardenable compound essentially strikes the base (11) of the cup wheel (05) and/or the drive shaft (07) emerging at the bottom (11) of the cup wheel.

11. The device according to any one of claims 8 to 10,
**characterised in that** the base (11) of the cup wheel (05) has an inner face shaped in a concave fashion.

12. The device according to any one of claims 8 to 11,
**characterised in that** the side wall of the cup wheel (05) has at the inside (12) an aperture angle (α) of 20° to 70°, in particular of approximately 50°, relative to the centre axis (19) of the cup wheel (05).

13. The device according to any one of claims 8 to 12,
**characterised in that** the jet (10) of the hardenable compound strikes the cup wheel (05) with an impact angle (β) of 30° to 70°, in particular of approximately 40°, relative to the centre axis (19) of the cup wheel (05).

14. The device according to any one of claims 1 to 13,
**characterised in that** at least two material components, in particular a base material and a hardener suitable for the latter, can be mixed in the spraying device (04) for the production of the jet (10) of the hardenable compound.

15. The device according to any one of claims 1 to 14,
**characterised in that** a directed round jet and/or flat jet of the hardenable compound can be generated with the spraying device (04).

16. The device according to any one of claims 1 to 15,
**characterised in that** the spraying device (04) has a valve (33), which can be actuated by means of a nozzle needle (26) and which is arranged close to a nozzle opening, and an actuating and restoring device (27, 28, 29, 30, 31, 32) for the nozzle needle (26), whereby there is provided in the nozzle (09) a nozzle channel (25), which emerges in the nozzle opening and in which the nozzle needle (26) is mounted so as to be displaceable, and whereby the nozzle channel (25) has at least one, in particular two, holes (23, 24) emerging laterally into the nozzle channel (25) and serving to feed components of the hardenable compound, which hole can be closed by the nozzle needle (26) adapted in diameter to the nozzle channel (25).

17. The device according to claim 16,
**characterised in that** the length of the nozzle needle (26) is selected in such a way that the latter is bordered in the rest state by the nozzle opening of the valve (33).

18. The device according to claim 16 or 17,
**characterised in that** the valve (33) at the same time forms the nozzle opening of the spraying device (04).

19. The device according to any one of claims 16 to 18,
**characterised in that** the nozzle (09), in particular the nozzle needle (26) and the component part (35) forming the nozzle channel, is produced at least in part from a hard metal or ceramic.

20. The device according to any one of claims 16 to 19,
**characterised in that** the holes (23, 24) are disposed lying in the same plane and running essentially at right angles to the nozzle channel (25).

21. The device according to any one of claims 16 to 20,
**characterised in that** the diameter of the holes (23, 24) is in each case smaller than that of the nozzle channel (25).

22. The device according to any one of claims 16 to 21,
**characterised in that** the axes of the holes (23, 24) are mutually offset.

23. The device according to any one of claims 16 to 22,
**characterised in that** the nozzle needle (26) is displaceable by means of a shaft (28) actuated by a bilaterally acting pressure piston (27).

24. The device according to any one of claims 1 to 23,
**characterised in that** an element for generating a directed air flow is provided on the device.

25. The device according to claim 24,
**characterised in that** the element for generating a directed air flow is designed in the manner of a propeller.

26. The device according to claim 25,
**characterised in that** the propeller is fixed in front of the centrifugal device (05) on the drive shaft (07).

27. A method for the internal coating of a pipe (02) with a hardenable compound,
**characterised in that**
- a directed jet (10) of the hardenable compound is generated with a spraying device (04),
- the jet (10) of the hardenable compound is directed onto the centrifugal device (05),
- the hardenable compound is hurled by the centrifugal device (05) against the internal wall (14) of the pipe (02) by reason of the centrifugal force acting as a result of the rotation,
- whereby the centrifugal device (05) and the spraying device (04) are traversed simultaneously with a specific forward feed along the pipe (02), in order to produce a coating (03) on the internal wall (14) along the pipe (02).

28. The method according to claim 27,
**characterised in that** the hardenable compound is hardened with a drip time of a few seconds.

29. The method according to claim 27 or 28,
**characterised in that** the hardenable compound is mixed from two material components, in particular a base material and a hardener suitable for the latter.

30. The method according to claim 29,
**characterised in that** a 2-component plastic on a polyurethane base and/or polyurea base is used as a hardenable compound.

31. The method according to claim 29 or 30,
**characterised in that** the two material components are first mixed in the spraying device directly before the formation of the jet.

32. The method according to any one of claims 27 to 31,
**characterised in that** the centrifugal device (05) rotates at a speed of 2000 revolutions/minute up to 60,000 revolutions/minute.

33. The method according to any one of claims 27 to 32,
**characterised in that** the hardenable compound or its components are fed into the spraying device (04) at a delivery pressure of 50 bar to 500 bar.

34. The method according to any one of claims 27 to 33,
**characterised in that** the speed of the centrifugal device (05) and/or the distance between the spraying device (04) and the centrifugal device (05) and/or the speed of the jet (10) of the hardenable compound is variable in each case individually or jointly in dependence on the desired layer thickness of the internal coating (03) and/or on the pipe diameter of the pipe (02) to be coated and/or on the forward feed rate of the device (01) and/or the material properties of the hardenable compound.

35. The method according to any one of claims 27 to 34,
**characterised in that** a directed air flow is generated in the region of the centrifugal device (05), in particular by the impulse of a propeller.

## Revendications

1. Dispositif (01) pour le revêtement de la surface intérieure (14) d'un tuyau (02) à l'aide d'une masse durcissable, un dispositif de projection (04) étant prévu sur le dispositif (01), au moyen duquel un jet (10) orienté de masse durcissable peut être généré,
**caractérisé en ce que**
un dispositif centrifuge (05) pouvant être entraîné en rotation est prévu sur le dispositif (01), le jet (10) de masse durcissable étant dirigé sur le dispositif centrifuge (05) de telle sorte que la masse durcissable, du fait de la force centrifuge générée par la rotation, est projetée par le dispositif centrifuge (05) sur la surface intérieure (14) du tuyau (02).

2. Dispositif selon la revendication 1,
**caractérisé en ce que**
un moteur d'entraînement (06) actionné notamment par de l'air comprimé ou par un moyen similaire est prévu pour l'entraînement du dispositif centrifuge (05).

3. Dispositif selon la revendication 1 ou 2,
**caractérisé en ce que**
la distance entre le dispositif centrifuge (05) et le dispositif de projection (04) peut être modifiée.

4. Dispositif selon l'une des revendications 1 à 3,
**caractérisé en ce que**
la vitesse de rotation du dispositif centrifuge (05) peut être modifiée.

5. Dispositif selon l'une des revendications 1 à 4,
**caractérisé en ce que**
la vitesse d'écoulement du jet (10) du masse durcissable peut être modifiée, notamment par la modification de la pression de refoulement.

6. Dispositif selon l'une des revendications 1 à 5,
**caractérisé en ce que**
le dispositif (01) peut se déplacer sur la longueur du tuyau (02) au moyen d'une installation de déplacement, notamment télécommandée.

7. Dispositif selon l'une des revendications 1 à 6,
**caractérisé en ce que**
une unité d'observation, notamment une caméra vidéo, est prévue sur le dispositif.

8. Dispositif selon l'une des revendications 1 à 7,
**caractérisé en ce que**
le dispositif centrifuge (05) est réalisé sous la forme d'un boisseau pouvant être entraîné en rotation autour du point de centre de son fond (11).

9. Dispositif selon la revendication 8,
**caractérisé en ce que**
le jet (10) de masse durcissable touche la face interne du boisseau (05).

10. Dispositif selon la revendication 9,
**caractérisé en ce que**
le jet (10) de masse durcissable touche sensiblement le fond (11) du boisseau (05) et/ou l'arbre d'entraînement (07) dépassant du fond (11) du boisseau.

11. Dispositif selon l'une des revendications 8 à 10,
**caractérisé en ce que**
le fond (11) du boisseau (05)présente une surface interne formée de manière concave.

12. Dispositif selon l'une des revendications 8 à 11,
**caractérisé en ce que**
la paroi latérale du boisseau (05) présente, sur sa face interne (12), un angle d'ouverture (α) de 20° à 70°, notamment d'environ 50°, par rapport à l'axe central (19) du boisseau (05).

13. Dispositif selon l'une des revendications 8 à 12,
**caractérisé en ce que**
le jet (10) de masse durcissable présente un angle d'impact (β) sur le boisseau (05) de 30° à 70°, notamment d'environ 40°, par rapport à l'axe central (19) du boisseau (05).

14. Dispositif selon l'une des revendications 1 à 13,
**caractérisé en ce que**
au moins deux composants de la matière, notamment une substance de base et un durcisseur approprié pour celle-ci, peuvent être mélangés dans le dispositif de projection (04) pour réaliser le jet (10) de masse durcissable.

15. Dispositif selon l'une des revendications 1 à 14,
**caractérisé en ce que**
le dispositif de projection (04) permet de générer un jet orienté rond et/ou en nappe de masse durcissable.

16. Dispositif selon l'une des revendications 1 à 15,
**caractérisé en ce que**
le dispositif de projection (04) est muni d'une vanne (33) commandée par un pointeau (26) disposée à proximité d'une ouverture de buse, et d'un dispositif de commande et de rappel (27, 28, 29, 30, 31, 32) pour le pointeau (26), un canal d'alimentation (25) débouchant dans l'ouverture de buse étant prévu dans la buse (09), dans lequel le pointeau (26) est disposé de manière mobile, et le canal d'alimentation (25) étant muni au moins d'un, notamment de deux perçages (23, 24) pénétrant latéralement dans le canal d'alimentation (25) et servant à amener les composants de la masse durcissable, pouvant être fermés par le pointeau (26) adapté au diamètre du canal d'alimentation (25).

17. Dispositif selon la revendication 16,
**caractérisé en ce que**
la longueur du pointeau (26) est choisie de sorte que celle-ci, au repos, réalise la fermeture de la buse avec la vanne (33).

18. Dispositif selon la revendication 16 ou 17,
**caractérisé en ce que**
la vanne (33) réalise en même temps l'ouverture de la buse du dispositif de projection (04).

19. Dispositif selon l'une des revendications 16 à 18,
**caractérisé en ce que**
la buse (09), notamment le pointeau (26) et l'élément (35) constituant le canal d'alimentation, est réalisée au moins en partie en un métal dur ou en céramique.

20. Dispositif selon l'une des revendications 16 à 19,
**caractérisé en ce que**
les perçages (23, 24) se trouvent dans le même plan et sont disposés de sorte à s'étendre de manière sensiblement perpendiculaire au canal d'alimentation (25).

21. Dispositif selon l'une des revendications 16 à 20,
**caractérisé en ce que**
le diamètre de chacun des perçages (23, 24) est inférieur à celui du canal d'alimentation (25).

22. Dispositif selon l'une des revendications 16 à 21,
**caractérisé en ce que**
les axes des perçages (23, 24) sont décalés l'un par rapport à l'autre.

23. Dispositif selon l'une des revendications 16 à 22,
**caractérisé en ce que**
le pointeau (26) peut être déplacé au moyen d'une tige (28) actionnée par un piston de pression (27) à double effet.

24. Dispositif selon l'une des revendications 1 à 23,
**caractérisé en ce que**
un élément pour la génération d'un flux d'air orienté est prévu sur le dispositif.

25. Dispositif selon la revendication 24,
**caractérisé en ce que**
l'élément pour la génération d'un flux d'air orienté présente une configuration du type d'une hélice.

26. Dispositif selon la revendication 25,
**caractérisé en ce que**
l'hélice est fixée sur l'arbre d'entraînement (07) en avant du dispositif centrifuge (05).

27. Procédé de revêtement de la surface intérieure d'un tuyau (02) avec une masse durcissable,
**caractérisé en ce que**
- un dispositif de projection (04) génère un jet (10) orienté de masse durcissable,
- le jet (10) de masse durcissable est dirigé sur un dispositif centrifuge (05),
- du fait de la force centrifuge générée par la rotation, la masse durcissable est projetée par le dispositif centrifuge (05) contre la surface intérieure (14) du tuyau (02),
- le dispositif centrifuge (05) et le dispositif de projection (04) étant déplacés en même temps à une vitesse d'avance déterminée le long du tuyau (02) pour créer un revêtement (03) sur la surface intérieure (14) tout au long du tuyau (02).

28. Procédé selon la revendication 27,
**caractérisé en ce que**
la masse durcissable durcit avec un temps d'utilisation de quelques secondes.

29. Procédé selon la revendication 27 ou 28,
**caractérisé en ce que**
la masse durcissable est mélangée à partir de deux composants de la matière, notamment une substance de base et un durcisseur approprié pour celle-ci.

30. Procédé selon la revendication 29,
**caractérisé en ce que**
il est fait appel, en tant que masse durcissable, à une matière synthétique à deux composants à base de polyuréthane et/ou à base de polycarbamide.

31. Procédé selon la revendication 29 ou 30,
**caractérisé en ce que**
les deux composants de la matière ne sont mélangés que directement avant la formation du jet dans le dispositif de projection.

32. Procédé selon l'une des revendications 27 à 31,
**caractérisé en ce que**
le dispositif centrifuge (05) tourne à une vitesse de rotation de 2000 tours/minute à 60000 tours/minute.

33. Procédé selon l'une des revendications 27 à 32,
**caractérisé en ce que**
la masse durcissable ou les composants de celle-ci sont amenés au dispositif de projection (04) à une pression de refoulement de 50 bars à 500 bars.

34. Procédé selon l'une des revendications 27 à 33,
**caractérisé en ce que**
la vitesse de rotation du dispositif centrifuge (05) et/ou la distance entre le dispositif de projection (04) et le dispositif centrifuge (05) et/ou la vitesse du jet (10) de matière durcissable peuvent toutes être modifiées individuellement ou ensemble en fonction de l'épaisseur désirée pour la couche du revêtement intérieur (03) et/ou du diamètre du tuyau (02) à revêtir et/ou de la vitesse d'avance du dispositif (01) et/ou des caractéristiques de la matière formant la masse durcissable.

35. Procédé selon l'une des revendications 27 à 34,
**caractérisé en ce que**
un flux d'air orienté est généré dans la zone du dispositif centrifuge (05), notamment par l'entraînement d'une hélice.
